# EUROPÄISCHE PATENTANMELDUNG

(11) **EP 1 112 893 A1**
(43) Veröffentlichungstag der Anmeldung: **04.07.2001**
(21) Anmeldenummer: 00100015.7
(22) Anmeldetag: 03.01.2000
(51) Int. Cl.: B60R 11/02

(54) **Mobiltelefon-Halterung mit Freisprecheinrichtung für ein Fahrzeug**

(71) Anmelder: Cullmann GmbH, D-90579 Langenzenn (DE)
(72) Erfinder: Leinfelder, Klaus, 90522 Oberasbach (DE); Schuffert, Guido, 91325 Adelsdorf (DE); Cullmann, Wolfgang, 90579 Langenzenn (DE)
(74) Vertreter: LOUIS, PÖHLAU, LOHRENTZ & SEGETH

(57) **Zusammenfassung**

Es wird eine Mobiltelefon-Halterung (10) für ein Fahrzeug beschrieben, die ein Grundteil (14) zur permanenten Befestigung im Fahrzeug und ein Mobiltelefon-Halteteil (16) aufweist, das am Grundteil (14) temporär festlegbar ist. Um den bislang üblichen Montage- und Verdrahtungsaufwand einer eine elektronische Schaltung, ein Mikrofon und einen Lautsprecher aufweisenden Freisprecheinrichtung zu verhindern, ist die Freisprecheinrichtung (22) mit der elektronischen Schaltung (24), dem Mikrofon (26) und dem Lautsprecher (28) in das Mobiltelefon-Halteteil (16) integriert.

## Beschreibung

Die Erfindung betrifft eine Mobiltelefon-Halterung für ein Fahrzeug, mit einem Grundteil zur permanenten Befestigung im Fahrzeug und mit einem Mobiltelefon-Halteteil, das am Grundteil temporär festlegbar ist, wobei eine Freisprecheinrichtung mit einer elektronischen Schaltung, einem Mikrofon und einem Lautsprecher vorgesehen ist.

Eine derartige Mobiltelefon-Halterung für ein Fahrzeug ist beispielsweise aus der DE 297 13 239 U1 der Anmelderin bekannt. Die mit einer solchen Mobiltelefon-Halterung kombinierte Freisprecheinrichtung ist bislang in das Fahrzeug eingebaut. Das Mikrofon wird dabei üblicherweise am Türholm oder im Bereich der Sonnenblende bzw. des Armaturenbrettes des Fahrzeuges montiert. Als Lautsprecher der Freisprecheinrichtung kann der Lautsprecher des Autoradios verwendet werden. Die Montage des Mikrofons und die Montage der elektronischen Schaltung der Freisprecheinrichtung und die Verdrahtung bzw. Verkabelung der elektronischen Schaltung, des Mikrofons und des Lautsprechers der Freisprecheinrichtung bedingen jedoch einen nicht zu vernachlässigenden Aufwand.

Aus der DE 43 00 433 A1 ist ein Funkgerät mit mindestens einem Lautsprecher und mindestens einem Mikrofon bekannt, die in eine Sonnenblendenvorrichtung eines Fahrzeuges integriert sind. Die in die Sonnenblende eingebauten Lautsprecher strahlen aus der dem Sprecher/Hörer zugewandten Schmalseite der Sonnenblende ab. Die Mikrofone sind auf der dem Sprecher/Hörer abgewandten Schmalseite der Sonnenblende angebracht.

Aus "Der große Westfalia-Katalog", 1998, Seite 292, sind Freisprecheinrichtungen für Mobiltelefone bekannt, wobei bei der Anruf-Übernahme ein Mikrofon und ein Lautsprecher aktiviert werden, so daß beide Hände des jeweiligen Fahrzeuglenkers während eines Telefongespräches am Lenkrad bleiben können. Diese bekannte Freisprecheinrichtung weist eine Ladeeinrichtung und einen externen Antennenanschluß für Mobiltelefone auf. Die Halterung für die Mobiltelefone ist zweiteilig ausgebildet, sie besteht aus einer Basis und einem Mobiltelefon-Adapter. Die Strom- und Antennenversorgung erfolgt von der Basis zum Adapter mittels eines Kabels. Diese bekannte Freisprecheinrichtung ermöglicht eine automatische Umschaltung zwischen dem Freisprech- und dem Hörer-Modus. Eine Entriegelungsmechanik dient zum Entriegeln des Mobiltelefons von der Freisprecheinrichtung. In das Gehäuse der Basis ist ein Lautsprecher integriert.

Der Erfindung liegt die Aufgabe zugrunde, eine Mobiltelefon-Halterung zu schaffen, mit der der Montageaufwand für die Freisprecheinrichtung, d.h. für die elektronische Schaltung und das Mikrofon der Freisprecheinrichtung, eliminiert ist.

Diese Aufgabe wird bei einer Mobiltelefon-Halterung der eingangs genannten Art erfindungsgemäß dadurch gelöst, daß die Freisprecheinrichtung mit der elektronischen Schaltung, dem Mikrofon und dem Lautsprecher Bestandteil des Mobiltelefon-Halteteils ist.

Die erfindungsgemäß ausgebildete Mobiltelefon-Halterung weist also den Vorteil auf, daß es nicht erforderlich ist, das Mikrofon der Freisprecheinrichtung an einem bestimmten Ort im Fahrzeug zu montieren, daß es des weiteren nicht erforderlich ist, auch die elektronische Schaltung der Freisprecheinrichtung an einem geeigneten Ort im Fahrzeug zu plazieren, und daß es außerdem nicht erforderlich ist, nach der passenden Positionierung des Mikrofons und der elektronischen Schaltung der Freisprecheinrichtung diese Komponenten der Freisprecheinrichtung miteinander und mit dem Lautsprecher der Freisprecheinrichtung geeignet zu verdrahten und zusammenzuschalten, weil die Freisprecheinrichtung mit ihrer elektronischen Schaltung, dem Mikrofon und dem Lautsprecher in das Mobiltelefon-Halteteil integriert ist.

Erfindungsgemäß kann das Mobiltelefon mit dem Mobiltelefon-Halteteil - unabhängig davon, ob das Mobiltelefon-Halteteil am Grundteil temporär festgelegt ist, oder ob das Mobiltelefon mit dem Mobiltelefon-Halteteil vom Grundteil entfernt und in die Hand genommen wird - kombiniert bleiben und eine handliche Einheit bilden. Das Mobiltelefon kann vom Mobiltelefon-Halteteil selbstverständlich auch entfernt werden. Das Grundteil und das Mobiltelefon-Halteteil sind derartig ausgebildet, daß das Mobiltelefon-Halteteil am Grundteil zeitsparend und zuverlässig temporär festlegbar und genauso einfach und zeit-und kraftsparend vom Grundteil gelöst werden kann. Diesbezüglich wird beispielsweise auf die ältere Gebrauchsmusteranmeldung 298 14 956.7 vom 20. August 1998 der Anmelderin hingewiesen, in der ein Grundteil mit einem zugehörigen Mobiltelefon-Halteteil beschrieben ist.

Als zweckmäßig hat es sich bei der erfindungsgemäß ausgebildeten Mobiltelefon-Halterung erwiesen, daß das Mobiltelefon-Halteteil einen Schalenabschnitt zur temporären Festlegung und Befestigung eines zugehörigen Mobiltelefons aufweist und daß das Mikrofon am einen Längs-Endabschnitt und der Lautsprecher am davon entfernten anderen Längs-Endabschnitt des Mobiltelefon-Halteteiles vorgesehen ist. Auf diese Weise werden nicht nur unerwünschte Rückkopplungen vermieden, sondern es ergibt sich außerdem auch der Vorteil, daß das jeweilige Mobiltelefon in einfacher Weise präzise am Mobiltelefon-Halteteil angebracht ist bzw. wunschgemäß auch vom Telefonmobil-Halteteil wieder entfernt werden kann.

Die Funktionsweise der erfindungsgemäß ausgebildeten Mobiltelefon-Halterung ist derartig, daß die Freisprecheinrichtung dann aktiviert ist, wenn das Mobiltelefon-Halteteil am fahrzeugfesten Grundteil festgelegt ist. Wird das Mobiltelefon-Halteteil mit dem damit kombinierten Mobiltelefon vom Grundteil entfernt, so wird die Freisprecheinrichtung deaktiviert. Zu diesem Zwecke kann bei der Mobiltelefon-Halterung das Mobiltelefon-Halteteil ein für die Freisprecheinrichtung vorgesehenes Schaltelement aufweisen, das mittels eines am Grundteil vorgesehenen Aktivierungselementes aktivierbar ist. Bei dem Aktivierungselement handelt es sich beispielsweise um einen Permanentmagneten. Das Schaltelement des Mobiltelefon-Halteteiles kann beispielsweise von einem Reed-Schalter gebildet sein, der mit Hilfe des besagten Magneten schaltbar ist.

Das Mobiltelefon-Halteteil kann an einer Stirnseite des Schalenabschnittes mit einer Anschlußeinrichtung für das jeweilige Mobiltelefon versehen sein. Bei dieser Anschlußeinrichtung kann es sich um eine Steckkontaktleiste für das jeweilige Mobiltelefon handeln. Diese Anschlußeinrichtung ist mit der im Mobiltelefon-Halteteil vorgesehenen elektronischen Schaltung der Freisprecheinrichtung zusammengeschaltet. Das Mobiltelefon-Halteteil der Mobiltelefon-Halterung weist ein Anschlußkabel auf, das sowohl mit dem elektrischen Bordnetz des Fahrzeuges als auch mit einer Telefon-Antenne des Fahrzeuges verbunden sein kann.

Der Schalenabschnitt des Mobiltelefon-Halteteiles kann mit einem Antennen-Anschlußelement versehen sein. Desgleichen ist es möglich, das Antennen-Anschlußelement in die oben genannte Anschlußeinrichtung zu integrieren.

Ein Ausführungsbeispiel der erfindungsgemäß ausgebildeten Mobiltelefon-Halterung für ein Fahrzeug ist in der Zeichnung dargestellt und wird nachfolgend beschrieben.

Es zeigen -:
- Figur 1: eine räumliche Darstellung der Mobiltelefon-Halterung in Kombination mit einem zugehörigen Mobiltelefon,
- Figur 2: eine Ansicht der Mobiltelefon-Halterung in Kombination mit einem zugehörigen Mobiltelefon gemäß Figur 1 in Blickrichtung von oben,
- Figur 3: den Schnitt entlang der Schnittlinie III-III in Figur 2, wobei jedoch entgegen der Schnittlinienführung auch die Antenne des Mobiltelefons gezeichnet ist,
- Figur 4: eine der Figur 1 ähnliche perspektivische Darstellung der Mobiltelefon-Halterung ohne zugehöriges Mobiltelefon,
- Figur 5: die Draufsicht auf die Mobiltelefon-Halterung gemäß Figur 4, und
- Figur 6: den Schnitt entlang der Schnittlinie VI-VI in Figur 5, wobei jedoch - wie in Figur 3 - nur das Mobiltelefon-Halteteil geschnitten dargestellt ist, während das zugehörige Grundteil in einer Seitenansicht gezeichnet ist.

Die Figuren verdeutlichen eine Mobiltelefon-Halterung 10 in Kombination mit einem Mobiltelefon 12. Die Mobiltelefon-Halterung 10 weist ein Grundteil 14 und ein Mobiltelefon-Halteteil 16 auf. Das Grundteil 14 ist zur Befestigung in einem Fahrzeug vorgesehen. Das Grundteil 14 wird beispielsweise an der Mittelkonsole oder am Armaturenbrett des Fahrzeuges montiert. Es ist beispielsweise auch möglich, das Grundteil 14 in einem dafür vorgesehenen Aufnahmeabteil einer Mittelarmlehne eines Fahrzeuges anzubringen.

Das Grundteil 14 ist beispielsweise mit einem starren Hakenelement 18 und mit federnden Hakenelementen 20 ausgebildet, die vom Grundteil 14 nach oben ragen. Ein solches Grundteil ist in der oben zitierten älteren Gebrauchsmusteranmeldung 298 14 956.7 vom 20. August 1998 offenbart.

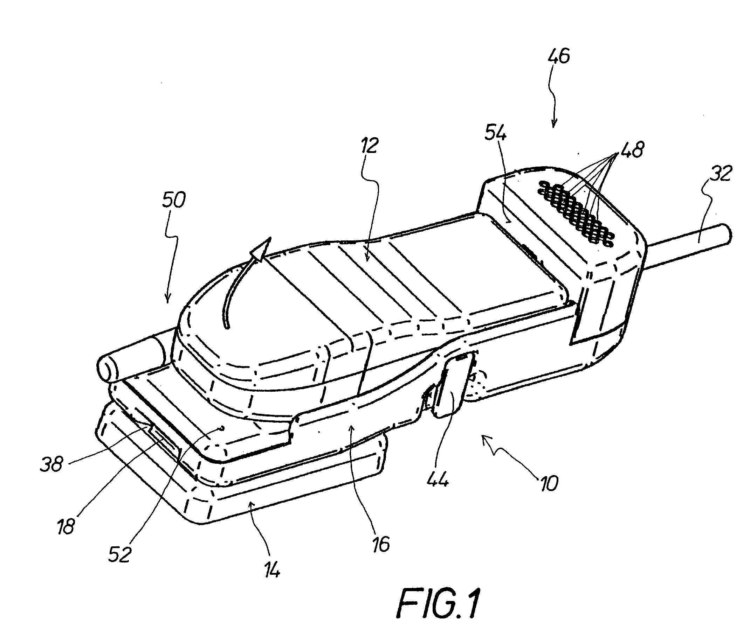

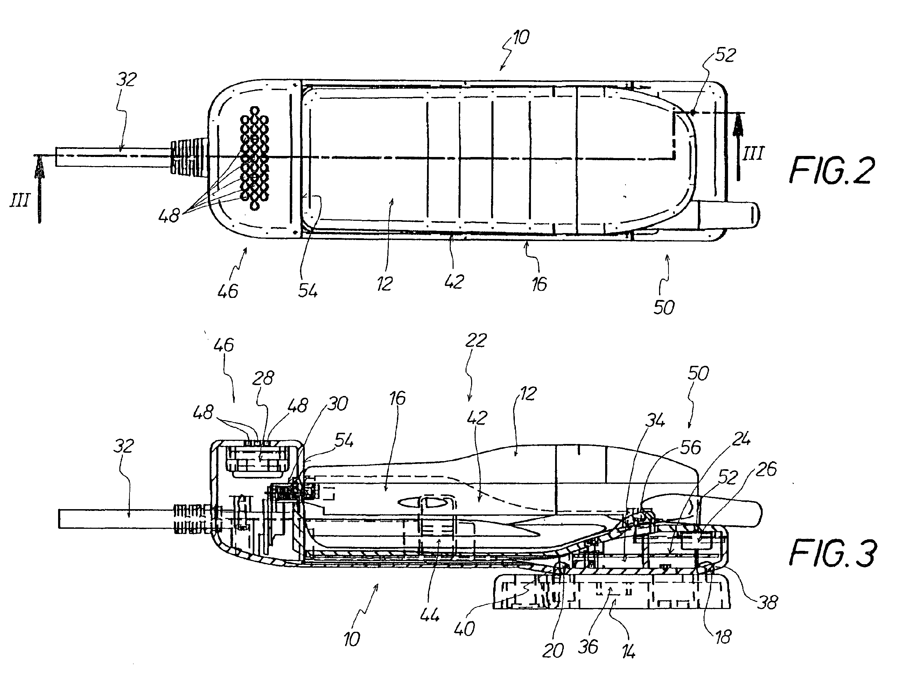

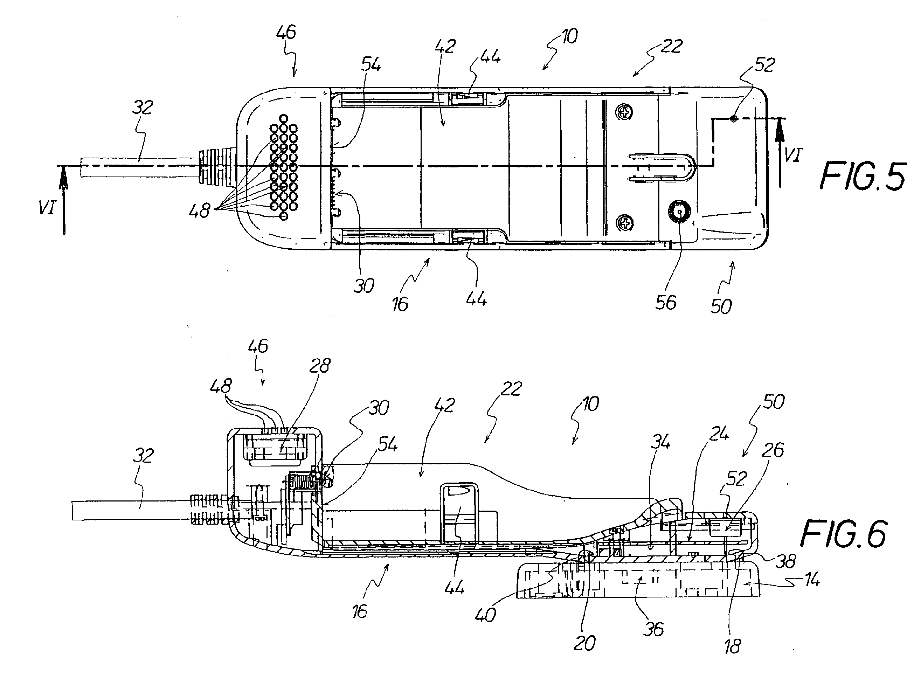

In dieser älteren Gebrauchsmusteranmeldung der Anmelderin ist auch ein Mobiltelefon-Halteteil beschrieben, das sich von dem in den Figuren 1 bis 6 gezeichneten Mobiltelefon-Halteteil 16 dadurch unterscheidet, daß das Mobiltelefon-Halteteil 16 nunmehr mit einer Freisprecheinrichtung 22 versehen ist, die eine elektronische Schaltung 24, ein Mikrofon 26 und einen Lautsprecher 28 aufweist. Die elektronische Schaltung 24, das Mikrofon 26 und der Lautsprecher 28 sind miteinander und mit einer Anschlußeinrichtung 30 sowie mit einem Anschlußkabel 32 zusammengeschaltet. Die Freisprecheinrichtung 22 ist also in das Mobiltelefon-Halteteil 16 der Mobiltelefon-Halterung 10 integriert.

An der elektronischen Schaltung 24 der Freisprecheinrichtung 22 ist außerdem ein Schaltelement 34 vorgesehen, bei dem es sich beispielsweise um einen Reed-Schalter handelt. Dem Schaltelement 34 im Mobiltelefon-Halteteil 16 ist im Grundteil 14 der Mobiltelefon-Halterung 10 ein Aktivierungselement 36 zugeordnet, das z.B. von einem Permanent-Magneten gebildet ist. Wird das Mobiltelefon-Halteteil 16 mit dem Mobiltelefon 12 am Grundteil 14 temporär festgelegt, so wird das Schaltelement 34 durch das Aktivierungselement 36 aktiviert, d.h. die Freisprecheinrichtung 22 eingeschaltet. Zur temporären Festlegung des Mobiltelefon-Halteteiles 16 am Grundteil 14 ist das Mobiltelefon-Halteteil 16 mit einer zum starren Hakenelement 18 zugehörigen Aussparung 38 und mit die federnden Hakenelemente 20 aufnehmenden Aussparungen 40 ausgebildet. Eine Aktivierung der Freisprecheinrichtung 22 ist nur möglich, wenn das Mobiltelefon-Halteteil 16 mit einem zugehörigen Mobiltelefon 12 kombiniert ist.

Zur Lokalisierung eines geeigneten Mobiltelefons 12 am Mobiltelefon-Halteteil 16 ist das Mobiltelefon-Halteteil 16 mit einem Schalenabschnitt 42 ausgebildet. Der Schalenabschnitt 42 weist federnde Befestigungselemente 44 zum temporären Festlegen eines passenden Mobiltelefons 12 auf.

Am einen Längs-Endabschnitt 46, aus welchem das Anschlußkabel 32 herausragt, sind Löcher 48 oder Durchbrüche eng nebeneinander vorgesehen, unter welchen sich im Mobiltelefon-Halteteil 16 der Lautsprecher 28 befindet.

An dem vom Endabschnitt 46 entfernten anderen Endabschnitt 50 des Mobiltelefon-Halteteiles 16 ist beispielsweise ein einziges Loch 52 vorgesehen, unter welchem sich das Mikrofon 26 der Freisprecheinrichtung 22 befindet.

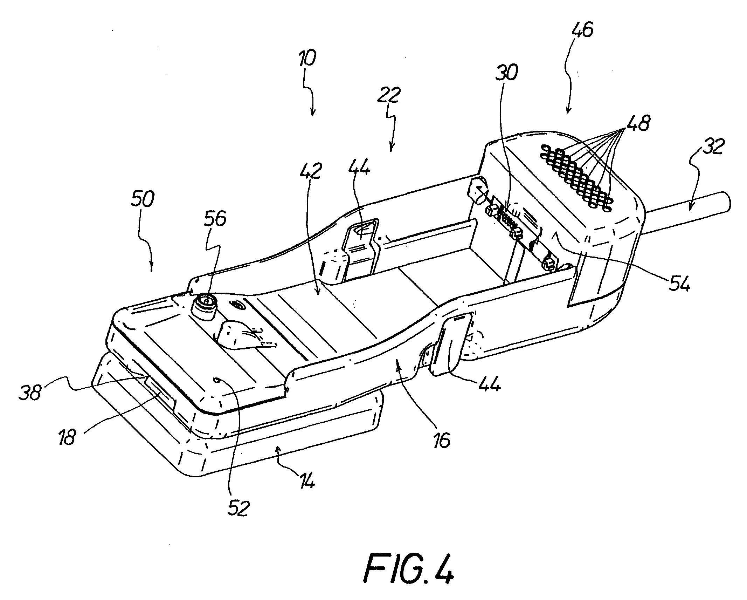

Wie beispielsweise aus Figur 4 deutlich ersichtlich ist, ist die Anschlußeinrichtung 30 für das jeweilige Mobiltelefon 12 als Steckleiste ausgebildet, die an der zum Endabschnitt 46 zugehörigen Stirnseite 54 des Schalenabschnittes 42 des Mobiltelefon-Halteteiles 16 vorgesehen ist. Ein Antennen-Anschlußelement 56 ist dem Endabschnitt 50 des Mobiltelefon-Halteteiles 16 zugeordnet.

Wird im Schalenabschnitt 42 des Mobiltelefon-Halteteiles 16 ein geignetes Mobiltelefon 12 angeordnet, wobei eine Kontaktierung der Anschlußeinrichtung 30 und des Antennen- Anschlußelementes 56 gegeben ist, kann das Mobiltelefon 12 mit dem Mobiltelefon-Halteteil 16 vom Grundteil 14 der Mobiltelefon-Halterung 10 entfernt und zum Gebrauch, d.h. zum Telefonieren, in einer Hand gehalten werden. Dabei macht sich das Mobiltelefon-Halteteil 16 gleichsam nicht bemerkbar und es kann mit dem Mobiltelefon telefoniert werden. Wird das Mobiltelefon-Halteteil 16 mit dem damit kombinierten Mobiltelefon 12 am Grundteil 14 angebracht, so wird mit Hilfe des Aktivierungselementes 36 im Grundteil 14 und mit Hilfe des damit zusammenwirkenden Schaltelementes 34 im Mobiltelefon-Halteteil 16 die in das Mobiltelefon-Halteteil 16 integrierte Freisprecheinrichtung 22 aktiviert, so daß über die Freisprecheinrichtung 22, d.h. über das Mikrofon 26 und den Lautsprecher 28 im Mobiltelefon-Halteteil 16 telefoniert werden kann. Ein Montage- und Verdrahtungsaufwand für die Freisprecheinrichtung 22 wird also - wie ohne weiteres klar ist - mit der Mobiltelefon-Halterung 10 vermieden.

## Patentansprüche

1. Mobiltelefon-Halterung für ein Fahrzeug, mit einem Grundteil (14) zur permanenten Befestigung im Fahrzeug und mit einem Mobiltelefon-Halteteil (16), das am Grundteil (14) temporär festlegbar ist, wobei eine Freisprecheinrichtung (22) mit einer elektronischen Schaltung (24), einem Mikrofon (26) und einem Lautsprecher (28) vorgesehen ist,
**dadurch gekennzeichnet,**
daß die Freisprecheinrichtung (22) mit der elektronischen Schaltung (24), dem Mikrofon (26) und dem Lautsprecher (28) Bestandteil des Mobiltelefon-Halteteils (16) ist.

2. Mobiltelefon-Halterung nach Anspruch 1,
**dadurch gekennzeichnet,**
daß das Mobiltelefon-Halteteil (16) einen Schalenabschnitt (42) zur temporären Befestigung eines zugehörigen Mobiltelefons (12) aufweist, und daß das Mikrofon (26) am einen Längs-Endabschnitt (50) und der Lautsprecher (28) am davon entfernten anderen Längs-Endabschnitt (46) des Mobiltelefon-Halteteiles (16) vorgesehen ist.

3. Mobiltelefon-Halterung nach Anspruch 1,
**dadurch gekennzeichnet,**
daß das Mobiltelefon-Halteteil (16) ein für die Freisprecheinrichtung (22) vorgesehenes Schaltelement (34) aufweist, das mittels eines am Grundteil (14) vorgesehenen Aktivierungselementes (36) aktivierbar ist.4.

4. Mobiltelefon-Halterung nach Anspruch 2,
**dadurch gekennzeichnet,**
daß das Mobiltelefon-Halteteil (16) an einer Stirnseite (54) des Schalenabschnittes (42) mit einer Anschlußeinrichtung (30) für das jeweilige Mobiltelefon (12) versehen ist.

5. Mobiltelefon-Halterung nach Anspruch 2,
**dadurch gekennzeichnet,**
daß der Schalenabschnitt (42) des Mobiltelefon-Halteteiles (16) mit einem Antennen-Anschlußelement (56) versehen ist.
